# FASCICULE DE BREVET EUROPEEN

(11) **EP 3 160 760 B1**
(45) Date de publication et mention de la délivrance du brevet: **19.03.2025**
(21) Numéro de dépôt: 15736219.5
(22) Date de dépôt: 30.06.2015
(51) Int. Cl.: B60C 1/00, C08K 3/04, C08L 23/22

(54) **GOMME INTÉRIEURE POUR PNEUMATIQUE À BASE DE CAOUTCHOUC BUTYLE COMPRENANT UNE FAIBLE TENEUR EN NOIR DE CARBONE ET UNE AUTRE CHARGE ADDITIONNELLE**
REIFENINNENSCHICHT AUF BASIS VON BUTYLKAUTSCHUK MIT GERINGEM RUSSGEHALT UND EINEM ANDEREN ZUSÄTZLICHEN FÜLLSTOFF
TYRE INNER LINER BASED ON BUTYL RUBBER COMPRISING A LOW CONTENT OF CARBON BLACK AND ANOTHER ADDITIONAL FILLER

(30) Priorité: 30.06.2014 FR 1456155
(43) Date de publication de la demande: 03.05.2017
(73) Titulaire: Compagnie Générale des Etablissements Michelin, 63000 Clermont-Ferrand (FR)
(72) Inventeur: RIOU, Aline, F-63040 Clermont-Ferrand Cedex 09 (FR)
(74) Mandataire: M.F.P. Michelin
(86) Numéro de dépôt international: PCT/EP2015/064850
(87) Numéro de publication internationale: WO 2016/001226

(56) Documents cités:
- EP-A2- 2 072 284
- WO-A1-2013/060858
- FR-A- 1 485 387
- FR-A1- 2 925 061
- FR-A1- 2 925 062
- GB-A- 1 156 196
- US-A1- 2010 249 278
- US-B2- 7 491 765

## Description

L'invention concerne une gomme intérieure pour pneumatique ayant une composition de caoutchouc comprenant une matrice élastomérique à base de caoutchouc butyle et contenant un faible taux de noir de carbone, ainsi qu'un faible taux total de charges renforçantes, de graphite et de charges inertes spécifiques.

L'invention concerne également un pneumatique comportant une telle gomme.

Les pneumatiques sans chambre à air présentent une surface intérieure de faible perméabilité à l'air afin d'éviter un dégonflage du pneumatique et de protéger les zones internes sensibles à ce dernier contre les arrivées d'oxygène et d'eau, telles que les nappes contenant des câbles métalliques sensibles à l'oxydation, cette protection permettant d'améliorer l'endurance du pneumatique. Aujourd'hui, une telle protection de la surface intérieure des pneumatiques est généralement réalisée par des gommes intérieures constituées par des compositions élastomériques à base de caoutchouc butyle. Or les performances en termes d'imperméabilité à l'air des caoutchoucs butyles sont liées à une épaisseur minimum non négligeable (de l'ordre du millimètre) et donc à un certain poids, ce qui n'est pas optimal.

Ainsi, il est nécessaire d'ajouter des charges renforçantes, telles que le noir de carbone, à la composition de caoutchouc de gomme intérieure pour améliorer son imperméabilité. Cependant en quantité importante, ces charges renforçantes nuisent à certaines propriétés de la composition à cuit : dégradation des propriétés mécaniques notamment diminution de la résistance à la flexion ainsi que des propriétés de résistance au roulement.

Le document FR 2 925 062 peut notamment être cité à titre d'exemple de document enseignant l'utilisation d'une forte teneur en noir de carbone.

Or, depuis que les économies de carburant et la nécessité de protéger l'environnement sont devenues une priorité, il est souhaitable de produire des gommes intérieures imperméables à l'air et présentant un poids et une hystérèse aussi faible que possible, afin d'obtenir une résistance au roulement du pneumatique améliorée.

L'introduction de plastifiant de type huile permet de pallier les problèmes de propriétés mécaniques exposés précédemment mais pénalise très fortement l'imperméabilité.

Il existe donc un besoin constant de diminuer l'hystérèse et le poids des gommes intérieures sans affecter les autres propriétés indispensables à ces gommes intérieures (imperméabilité et endurance).

Différentes solutions ont été envisagées pour remédier à ces inconvénients en particulier en faisant appel à d'autres types de charges venant s'additionner aux charges renforçantes, souvent connues sous le nom de smectites, notamment des smectites organophiles. Ces smectites organophiles améliorent les propriétés d'imperméabilité des matériaux si elles sont bien dispersées dans le matériau. Cependant cette dispersion est souvent difficile à obtenir du fait de la faible compatibilité thermodynamique existant entre les élastomères et de telles charges. La publication WO 2006/047509 de la demanderesse décrit une composition pour gomme intérieure de pneumatique dont la composition à base de caoutchouc butyle et comprenant du noir de carbone, comporte des charges non renforçantes constituées par des smectites organophiles réduisant la perméabilité aux gaz, dispersées dans la matrice élastomérique ainsi qu'un plastifiant spécifique constitué par une résine terpénique ayant notamment une température de transition vitreuse Tg supérieure à 50°C. Cette composition présente effectivement des propriétés mécaniques et d'imperméabilité la rendant acceptable pour une utilisation en tant que gomme intérieure de pneumatique, grâce à l'effet combiné de ces smectites organophiles et de cette résine à haute Tg.

D'autres solutions consistent à utiliser des charges lamellaires telles que du graphite afin d'améliorer l'imperméabilité de la composition. Cependant la présence du graphite peut entraîner des problèmes de processabilité des mélanges. Ainsi la demande WO 2008/145314 décrit une composition de caoutchouc pour gomme intérieure de pneumatique à base d'au moins un caoutchouc butyle, une charge renforçante, du graphite et une résine plastifiante hydrocarbonée, permettant l'obtention d'une gomme intérieure présentant également un bon compromis de propriétés.

Par ailleurs, si l'on décidait de baisser la teneur en noir de carbone pour éviter les problèmes exposés précédemment liés à une quantité importante de noir de carbone, on pourrait s'attendre à ce que cela nuise à l'endurance du pneumatique.

La demanderesse a néanmoins découvert, de manière surprenante et contrairement aux connaissances de l'homme du métier, qu'il existait une solution permettant d'obtenir une gomme intérieure avec un bon compromis de propriétés et un taux de noir de carbone faible. Cette solution consiste à réaliser une gomme intérieure présentant une faible quantité de noir de carbone en ajoutant une charge additionnelle interne spécifique sans pour autant augmenter de manière importante la teneur totale en charges renforçantes ou semi-renforçantes, telles que le graphite, dans une matrice élastomérique majoritairement constituée de caoutchouc butyle.

Or l'homme du métier s'attend à ce qu'une telle composition nuise aux propriétés d'endurance d'un pneumatique ayant une gomme intérieure à base de cette composition.

Cependant, la demanderesse a découvert qu'au contraire une telle composition permettait d'obtenir un pneumatique présentant une bonne imperméabilité et une bonne endurance tout en présentant une hystérèse réduite.

L'invention a donc pour objet une gomme intérieure pour pneumatique ayant une composition de caoutchouc comprenant :
- une matrice élastomérique comprenant au moins 50 pce d'un ou plusieurs caoutchoucs butyles,
- de 5 à 30 pce de noir de carbone,
- de 0 à moins de 10 pce d'un agent plastifiant,
- au moins 5 pce d'une ou plusieurs charges additionnelles choisies parmi les charges renforçantes autres que du noir de carbone, le graphite et les charges inertes, lesdites charges inertes étant choisies parmi la craie, l'argile, la bentonite, le talc, le kaolin, des microbilles de verre, des paillettes de verre et un mélange de ces composés,
   la teneur totale en charges renforçantes et en graphite dans la composition de caoutchouc variant de 5 à 50 pce,
   la teneur de la ou des charges inertes dans la composition de caoutchouc varie de 1 à 60 pce.

Une telle gomme intérieure selon l'invention présente une hystérèse plus faible qu'une gomme intérieure contenant plus de noir de carbone.

De plus, elle répond aux exigences requises pour des gommes intérieures, à savoir une bonne perméabilité.

Enfin, les pneumatiques fabriqués à partir d'une gomme intérieure selon l'invention présentent une bonne endurance.

L'invention a également pour objet un pneumatique comportant une gomme intérieure telle que définie ci dessus.

L'invention ainsi que ses avantages seront aisément compris à la lumière de la description et des exemples de réalisations qui suivent.

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Dans la présente demande, on entend par « partie pour cent d'élastomère » ou « pce », la partie en poids d'un constituant pour 100 parties en poids du ou des élastomères c'est-à-dire du poids total du ou des élastomères. Ainsi, un constituant à 60 pce signifiera par exemple 60 g de ce constituant pour 100 g d'élastomère.

De façon usuelle dans la présente demande, on utilise indifféremment dans le texte les termes « élastomère » et « caoutchouc » qui sont interchangeables.

Ainsi, un premier objet de l'invention est une gomme intérieure pour pneumatique ayant une composition de caoutchouc comprenant :
- une matrice élastomérique comprenant au moins 50 pce d'un ou plusieurs caoutchoucs butyles,
- de 5 à 30 pce de noir de carbone,
- de 0 à moins de 10 pce d'un agent plastifiant,
- au moins 5 pce d'une ou plusieurs charges additionnelles choisies parmi les charges renforçantes autres que du noir de carbone, le graphite et les charges inertes, lesdites charges inertes étant choisies parmi la craie, l'argile, la bentonite, le talc, le kaolin, des microbilles de verre, des paillettes de verre et un mélange de ces composés,
   la teneur totale en charges renforçantes et en graphite dans la composition de caoutchouc variant de 5 à 50 pce,
   la teneur de la ou des charges inertes dans la composition de caoutchouc varie de 1 à 60 pce.

Par « matrice élastomérique » au sens de la présente invention, on entend l'ensemble des élastomères (ou caoutchoucs) de la composition de caoutchouc. Ainsi, la matrice élastomérique peut notamment être constituée d'un seul élastomère mais aussi d'un coupage de deux ou de plusieurs élastomères.

Par « caoutchouc butyle » au sens de la présente invention, on entend un homopolymère d'isobutylène ou un copolymère d'isobutylène et d'isoprène, ainsi que les dérivés halogénés, en particulier généralement bromés ou chlorés, de ces homopolymères d'isobutylène et copolymères d'isobutylène et d'isoprène.

De manière particulièrement préférée, le ou les caoutchoucs butyles utilisables dans la gomme intérieure selon l'invention sont choisis parmi les caoutchoucs isobutylène, les copolymères d'isobutylène et d'isoprène (IIR), les caoutchoucs bromobutyles tels que le copolymère bromoisobutylène-isoprène (BIIR) et les caoutchoucs chlorobutyles tels que le copolymère chloroisobutylène-isoprène (CIIR).

Par extension de la définition précédente, on inclura également sous l'appellation « caoutchouc butyle » des copolymères d'isobutylène et de dérivés de styrène tels que les copolymères d'isobutylène et méthylstyrène bromé (BIMS) dont fait notamment partie l'élastomère nommé EXXPRO commercialisé par la société Exxon.

Le ou les caoutchoucs butyles utilisables dans la gomme intérieure de la présente invention représentent au moins 50 pce, c'est-à-dire qu'ils représentent au moins 50 % en poids du poids total de la matrice élastomérique.

A titre d'autres élastomères présents dans la matrice élastomérique en complément du ou des caoutchoucs butyles, on peut notamment citer les élastomères diéniques autres que les élastomères butyles précédemment cités.

Par élastomère ou caoutchouc « diénique », doit être compris, de manière connue, un ou plusieurs élastomères issus au moins en partie (i.e ; un homopolymère ou un copolymère) de monomères diènes (monomères porteurs de deux doubles liaisons carbone-carbone, conjuguées ou non).

Ces élastomères diéniques peuvent être classés dans deux catégories : « essentiellement insaturés » ou « essentiellement saturés ».

On entend en général par « essentiellement insaturé », un élastomère diénique issu au moins en partie de monomères diènes conjugués, ayant un taux de motifs ou unités d'origine diénique (diènes conjugués) qui est supérieur à 15 % (% en mole). Dans la catégorie des élastomères diéniques « essentiellement insaturés », on entend en particulier par élastomère diénique « fortement insaturé » un élastomère diénique ayant un taux de motifs d'origine diénique (diènes conjugués) qui est supérieur à 50 %.

C'est ainsi que des élastomères diéniques tels que certains copolymères de diènes et d'alpha-oléfines type EPDM peuvent être qualifiés d'élastomères diéniques « essentiellement saturés » (taux de motifs d'origine diénique faible ou très faible, toujours inférieur à 15 %).

Ces définitions étant données, on entend plus particulièrement par élastomère diénique, quelque soit la catégorie ci-dessus, susceptible d'être utilisé dans la matrice élastomérique de la gomme intérieure conforme à l'invention:
(a) - tout homopolymère obtenu par polymérisation d'un monomère diène conjugué ayant de 4 à 12 atomes de carbone ;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Les copolymères diéniques précédemment cités (catégorie (b)) peuvent contenir entre 99 % et 20 % en poids d'unités diéniques et entre 1 % et 80 % en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Conviennent les polybutadiènes et en particulier ceux ayant une teneur (% molaire) en unités -1,2 comprise entre 4 % et 80 % ou ceux ayant une teneur (% molaire) en cis-1,4 supérieure à 80 %, les polyisoprènes, les copolymères de butadiène-styrène et en particulier ceux ayant une teneur en styrène comprise entre 5 % et 50 % en poids et plus particulièrement entre 20 % et 40 %, une teneur (% molaire) en liaisons -1,2 de la partie butadiénique comprise entre 4 % et 65 %, une teneur (% molaire) en liaisons trans-1,4 comprise entre 20 % et 80 %, les copolymères de butadiène-isoprène et notamment ceux ayant une teneur en isoprène comprise entre 5 % et 90 % en poids et une température de transition vitreuse (Tg, mesurée selon ASTM D3418) de -40°C à -80°C, les copolymères isoprène-styrène et notamment ceux ayant une teneur en styrène comprise entre 5 % et 50 % en poids et une Tg comprise entre -25°C et -50°C. Dans le cas des copolymères de butadiène-styrène-isoprène conviennent notamment ceux ayant une teneur en styrène comprise entre 5 % et 50 % en poids et plus particulièrement comprise entre 10 % et 40 %, une teneur en isoprène comprise entre 15 % et 60 % en poids et plus particulièrement entre 20 % et 50 %, une teneur en butadiène comprise entre 5 % et 50 % en poids et plus particulièrement comprise entre 20 % et 40 %, une teneur (% molaire) en unités -1,2 de la partie butadiénique comprise entre 4 % et 85 %, une teneur (% molaire) en unités trans -1,4 de la partie butadiénique comprise entre 6 % et 80 %, une teneur (% molaire) en unités -1,2 plus -3,4 de la partie isoprénique comprise entre 5 % et 70 % et une teneur (% molaire) en unités trans -1,4 de la partie isoprénique comprise entre 10 % et 50 %, et plus généralement tout copolymère butadiène-styrène-isoprène ayant une Tg comprise entre -20°C et -70°C.

A titre d'autres élastomères présents dans la matrice élastomérique en complément du ou des caoutchoucs butyles, on peut aussi citer les élastomères isopréniques autres que les élastomères butyles précédemment cités.

Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse ; parmi ces polyisoprènes de synthèse, sont utilisés de préférence des polyisoprènes ayant un taux (% molaire) de liaisons cis-1,4 supérieur à 90 %, plus préférentiellement encore supérieur à 98 %.

De manière préférée dans la présente invention, le ou les caoutchoucs butyles ont une teneur variant de 70 à 100 pce, de préférence variant de 90 à 100 pce.

Dans un premier mode particulier de l'invention, la matrice élastomérique comprend un coupage de plusieurs caoutchoucs butyles.

Dans un second mode particulier de l'invention, la matrice élastomérique consiste en un ou plusieurs caoutchoucs butyles.

Dans ce second mode particulier, il est bien entendu compris que la teneur du caoutchouc butyle seul ou du coupage de plusieurs caoutchoucs butyles est alors de 100 pce.

Dans le cas d'un faible taux de la somme de la ou des charges renforçantes et du graphite, et en particulier d'un taux très faible de la ou des charges renforçantes, l'homme du métier saura adapter la masse moléculaire du ou des butyles afin d'obtenir une processabilité à cru satisfaisante.

Comme vu précédemment, la teneur totale en charges renforçantes et en graphite dans la composition de caoutchouc utilisable dans la gomme intérieure selon l'invention varie de 5 à 50 pce.

On entend par charges renforçantes au sens de la présente invention, tout type de charges connues pour ses capacités à renforcer une composition de caoutchouc utilisable pour la fabrication de pneumatiques, par exemple une charge organique telle que du noir de carbone ou bien encore une charge inorganique renforçante.

Ainsi dans la présente invention, la composition de caoutchouc utilisable dans la gomme intérieure selon l'invention comprend de 5 à 30 pce de noir de carbone.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTI), comme par exemple les noirs N115, N134, N234, N326, N330, N339, N347, N375, ou encore, selon les applications visées, les noirs de séries plus élevées (par exemple N660, N683, N772), voire même N990.

Bien entendu, on peut utiliser un seul noir de carbone ou un coupage de plusieurs noirs de carbone de grades ASTM différents.

De manière préférée dans la présente invention, la teneur en noir de carbone dans la composition de caoutchouc varie de 15 à 30 pce, de préférence varie de 20 à 30 pce.

Comme vu précédemment, la composition de caoutchouc utilisable dans la gomme intérieure selon l'invention comprend au moins 5 pce d'une ou plusieurs charges additionnelles choisies parmi les charges renforçantes autres que du noir de carbone, le graphite et les charges inertes, lesdites charges inertes étant choisies parmi la craie, l'argile, la bentonite, le talc, le kaolin, des microbilles de verre, des paillettes de verre et un mélange de ces composés.

Ainsi la composition de caoutchouc utilisable dans la présente invention peut aussi comprendre une ou des charges inorganiques renforçantes.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non-noire » (« non-black filler ») par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₇O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g.

A titres de silices précipitées hautement dispersibles (dites « HDS »), on citera par exemple les silices Ultrasil 7000 et Ultrasil 7005 de la société Degussa, les silices Zeosil 1165MP, 1135MP et 11 15MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

On rappelle ici que par « agent de couplage » on entend, de manière connue, un agent apte à établir une liaison suffisante, de nature chimique et/ou physique, entre la charge inorganique et l'élastomère.

De tels agents de couplage, notamment silice/élastomère ont été décrits dans un très grand nombre de documents, les plus connus étant des organosilanes bifonctionnels porteurs de fonctions alkoxyle (c'est-à-dire, par définition, des « alkoxysilanes ») et de fonctions capables de réagir avec l'élastomère telles que par exemple des fonctions polysulfure.

Comme vu précédemment, la ou les charges additionnelles présentes dans la composition de caoutchouc utilisables selon l'invention peuvent être choisies parmi le graphite.

De manière préférée, la teneur du graphite dans la composition de caoutchouc utilisable selon l'invention varie de 0 à moins de 35 pce, de préférence de 1 à moins de 35 pce, et encore plus préférentiellement de 1 à 20 pce.

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A ; il appartient au groupe cristallin : groupe d'espace P63/mmc.

Le graphite ne peut pas être considéré comme une charge renforçante contrairement au noir de carbone ou à la silice, dans la mesure où il permet une augmentation du module en traction d'une composition de caoutchouc dans laquelle il est incorporé.

Ces définitions étant données, on entend plus particulièrement par graphite susceptible d'être utilisé selon l'invention :
- (a) tout graphite naturel, associé aux roches affectées par le métamorphisme, après séparation des impuretés accompagnant les veines de graphite et après broyage;
- (b) tout graphite naturel expansable thermiquement, i.e. dans lequel est intercalé un composé chimique à l'état liquide, par exemple un acide, entre ses plans de graphène;
- (c) tout graphite naturel expansé, ce dernier étant réalisé en deux temps : intercalation d'un composé chimique à l'état liquide, par exemple un acide, entre les plans de graphène d'un graphite naturel par traitement chimique et expansion à haute température ;
- (d) tout graphite synthétique obtenu par graphitisation de coke de pétrole.

La composition de caoutchouc utilisable selon l'invention peut contenir un seul graphite ou un mélange de plusieurs graphites, ainsi on peut avoir un coupage de graphite naturel et/ou de graphite expansé et/ou de graphite synthétique.

Le graphite tel que défini précédemment, peut se présenter sur un plan morphologique sous une forme lamellaire ou non.

De manière préférée, le graphite utilisable selon l'invention se présente sous forme lamellaire.

Comme vu précédemment, la ou les charges additionnelles peuvent être choisies parmi les charges inertes, lesdites charges inertes étant choisies parmi la craie, l'argile, la bentonite, le talc, le kaolin, des microbilles de verre, des paillettes de verre et un mélange de ces composés.

De manière particulièrement préférée, la teneur de la ou des charges inertes dans la composition de caoutchouc utilisable selon l'invention varie de 1 à 45 pce.

Lorsque la teneur de la ou des charges inertes dans la composition de caoutchouc utilisable selon l'invention varie de préférence de 1 à 45 pce, alors dans un mode particulier de l'invention, la teneur en noir de carbone dans la composition de caoutchouc utilisable selon l'invention varie de 5 à 15 pce.

De manière préférée, la charge inerte utilisable selon l'invention est de la craie.

La craie se présente préférentiellement sous la forme de microparticules dont la taille moyenne (en masse) est supérieure à 1 µm. La taille médiane des microparticules de craie, mesure obtenue sur sédigraph, est préférentiellement comprise entre 0,5 et 200 µm, plus particulièrement entre 0,5 et 30 µm et encore plus préférentiellement entre 1 et 20 µm.

Les craies connues de l'homme du métier sont les carbonates de calcium naturels (craie) ou synthétiques avec ou sans enrobage (par exemple avec de l'acide stéarique).

A titre d'exemples de telles craies préférentielles et disponibles commercialement, on peut citer par exemple la craie vendue sous la dénomination « Omya BLS » par la société Omya.

Comme expliqué précédemment, la teneur totale en charges renforçantes et en graphite dans la composition de caoutchouc utilisable dans la gomme intérieure selon l'invention varie de 5 à 50 pce. Plus précisément, cela signifie que la somme des teneurs en noir de carbone et en autres charges renforçantes éventuelles, par exemple la silice, et des teneurs de graphite éventuel, est supérieure ou égale à 5 et est inférieure ou égale à 50 pce.

Dans la présente invention, le noir de carbone peut avantageusement constituer la seule charge renforçante ou la charge renforçante majoritaire.

Pour rappel dans la présente invention, la composition de caoutchouc utilisable dans la gomme intérieure comprend de 0 à moins de 10 pce d'un agent plastifiant.

De manière connue de l'homme du métier, un « agent plastifiant » par définition est un composé liquide ou solide à température ambiante (23°C) et à pression atmosphérique (1,013.10⁵ Pa) compatible, c'est-à-dire miscible au taux utilisé avec la composition de caoutchouc à laquelle il est destiné, de manière à agir comme un véritable agent diluant.

De manière préférée dans la présente invention, l'agent plastifiant est choisi parmi les huiles plastifiantes et les résines plastifiantes.

Par définition, une huile plastifiante (aussi appelée plastifiant liquide) est liquide à température ambiante et pression atmosphérique.

Cette ou ces huiles plastifiantes ont généralement une température de transition vitreuse faible, inférieure à -20°C (Tg, mesurée selon ASTM D3418), de préférence inférieure à -40°C.

Les températures de transition vitreuse sont mesurées de manière connue par DSC (« Differential Scanning Calorimetry ») selon la norme ASTM D3418.

A titre d'huile plastifiante utilisable dans la gomme intérieure selon l'invention, on peut utiliser toutes les huiles dites « d'extension » qu'elles soient de nature aromatique ou non-aromatique connues pour leurs propriétés plastifiantes vis-à-vis des élastomères utilisés dans la présente invention.

Conviennent particulièrement les huiles plastifiantes choisies dans le groupe constitué par les polymères diéniques liquides, les huiles polyoléfiniques, les huiles naphténiques, les huiles paraffiniques, les huiles DAE (Distillate Aromatic Extracts), les huiles MES (Medium Extracted Solvates), les huiles TDAE (Treated Distillate Aromatic Extracts), les huiles RAE (Residual Aromatic Extracts), les huiles TRAE (Treated Residual Aromatic Extracts), les huiles SRAE (Safety Residual Aromatic Extracts), les huiles minérales, les huiles végétales, les plastifiants éthers, les plastifiants esters, les plastifiants phosphates, les plastifiants sulfonates et les mélanges de ces composés.

Conviennent également les polymères liquides issus de la polymérisation d'oléfines ou de diènes, comme par exemple ceux choisis dans le groupe constitué par les polybutènes, les polydiènes, en particulier les polybutadiènes, les polyisoprènes, les copolymères de butadiène et d'isoprène, les copolymères de butadiène ou d'isoprène et de styrène, et les mélanges de ces polymères liquides. La masse molaire moyenne en nombre de tels polymères liquides est préférentiellement comprise dans un domaine allant de 500 g/mol à 50 000 g/mol, plus préférentiellement de 1000 g/mol à 10 000 g/mol. A titre d'exemple peuvent être cités notamment les produits « Ricon » de la société Sartomer.

Conviennent également les huiles polyisobutylènes fonctionnalisées ou non, ayant une masse moléculaire comprise entre 200 g/mol et 40 000 g/mol.

Selon un autre mode de réalisation préférentiel de l'invention, la ou les huiles plastifiantes sont des huiles végétales (telles que huiles de lin, carthame, soja, maïs, coton, navette, ricin, abrasin, pin, tournesol, palme, olive, noix de coco, arachide, pépin de raisin, et les mélanges de ces huiles, en particulier une huile de tournesol).

Selon un autre mode de réalisation particulier de l'invention, la ou les huiles plastifiantes sont un éther comme par exemple les polyéthylène glycols ou les polypropylène glycols.

Conviennent également les huiles plastifiantes choisies dans le groupe constitué par les plastifiants esters, les plastifiants phosphates, les plastifiants sulfonates et les mélanges de ces composés.

Pour rappel, l'agent plastifiant peut aussi être choisi parmi les résines plastifiantes.

Par opposition avec les huiles plastifiantes, on entend par résine plastifiante un composé qui est solide à température ambiante (23°C) et à pression atmosphérique (1,013.10⁵ Pa).

Cette ou ces résines plastifiantes ont généralement une température de transition vitreuse, supérieure à 20°C (Tg, mesurée selon ASTM D3418), de préférence supérieure à 30°C.

De manière préférée, les résines plastifiantes utilisables selon l'invention sont des résines plastifiantes hydrocarbonées.

Les résines hydrocarbonées sont des polymères bien connus de l'homme du métier, miscibles donc par nature dans les compositions d'élastomère(s) lorsqu'elles sont qualifiées en outre de « plastifiantes ».

Ces résines plastifiantes hydrocarbonées présentent généralement une température de transition vitreuse supérieure à 20°C et une température de ramollissement inférieure à 170°C.

Les températures de ramollissement (« softening point ») sont mesurées selon la norme ASTM E-28.

Elles ont été largement décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pneumatique (5.5. « Rubber Tires and Mechanical Goods »).

Elles peuvent être aliphatiques, naphténiques, aromatiques ou encore du type aliphatique/naphténique/aromatique c'est-à-dire à base de monomères aliphatiques et/ou naphténiques et/ou aromatiques. Elles peuvent être naturelles ou synthétiques, à base ou non de pétrole (si tel est le cas, elles sont connues aussi sous le nom de résines de pétrole). Elles sont préférentiellement exclusivement hydrocarbonées, c'est-à-dire qu'elles ne comportent que des atomes de carbone et d'hydrogène.

La teneur en agent plastifiant dans la composition de caoutchouc utilisable selon l'invention varie de 0 à moins de 10 pce.

De manière préférée, la teneur en agent plastifiant dans la composition de caoutchouc est inférieure ou égale à 6 pce.

La composition de caoutchouc utilisable dans la gomme intérieure selon l'invention peut comporter également tout ou partie des additifs usuels habituellement utilisés dans les compositions d'élastomères destinées à la fabrication de pneumatiques, comme par exemple des agents de protection tels que anti-ozonants chimiques, anti-oxydants, des agents anti-fatigue, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides et/ ou des résines vulcanisantes, des accélérateurs de vulcanisation, des activateurs de vulcanisation.

La composition de caoutchouc utilisable dans la gomme intérieure selon l'invention peut être fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 110°C et 140°C, de préférence entre 110°C et 135°C, suivie d'une seconde phase de travail mécanique (phase dite « productive ») jusqu'à une plus basse température, typiquement inférieure à 110°C, par exemple entre 40°C et 100°C, et enfin une phase de finition au cours de laquelle est incorporé le système de réticulation.

Le procédé pour préparer une telle composition comporte par exemple les étapes suivantes :
- malaxer thermomécaniquement (par exemple en une ou plusieurs fois) la matrice élastomérique avec le noir de carbone, la ou les charges additionnelles, le système plastifiant s'il est présent, jusqu'à atteindre une température maximale comprise entre 110°C et 140°C (phase dite « non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (le ou les caoutchoucs butyles, le ou les autres élastomères éventuels, le système plastifiant éventuel, le noir du carbone et la ou les charges additionnelles), puis dans un deuxième temps, par exemple après une à deux minutes de malaxage, les autres additifs éventuels, agents de recouvrement de la charge ou de mise en œuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères selon l'invention en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé « MBTS »), N-cyclohexyl-2-benzothiazyle sulfénamide (en abrégé « CBS »), N,N-dicyclohexyl-2-benzothiazyle sulfénamide (en abrégé « DCBS »), N-ter-butyl-2-benzothiazyle sulfénamide (en abrégé « TBBS »), N-ter-butyl-2-benzothiazyle sulfénimide (en abrégé « TBSI »), dibenzyldithiocarbamate de zinc (en abrégé « ZBEC ») et les mélanges de ces composés.

De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une gomme intérieure.

La gomme intérieure est utilisable dans tout type d'objet pneumatique. A titre d'exemples de tels objets pneumatiques, on peut citer les bateaux pneumatiques, les ballons ou balles utilisés pour le jeu ou le sport.

Par conséquent, l'invention concerne également un pneumatique comportant une gomme intérieure telle que définie précédemment.

De manière générale, le pneumatique selon l'invention est destiné à équiper des véhicules à moteur de type tourisme, SUV (« Sport Utility Vehicles »), deux roues (notamment motos), avions, ainsi que des véhicules industriels tels que des camionnettes, des poids-lourds et autres véhicules de transport ou de manutention.

L'invention ainsi que ses avantages seront compris de manière plus approfondie, à la lumière des exemples de réalisation qui suivent.

### EXEMPLES :

### I Méthodes de mesures et tests :

### 1) Propriétés après cuisson : essais de traction

Ces essais permettent de déterminer les contraintes d'élasticité et les propriétés à la rupture.

Sauf indication différente, ils sont effectués conformément à la norme française NF T 46-002 de septembre 1988. On mesure les contraintes à la rupture (en MPa) et les allongements à la rupture (en %), à une température de 23°C.

### 2) Propriétés après cuisson : propriétés dynamiques

La propriété dynamique tan(δ)max est mesurée sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz, à une température de 23°C selon la norme ASTM D 1349-99. On effectue un balayage en amplitude de déformation de 0,1 % à 50 % crête-crête (cycle aller), puis de 50 % à 0,1 % crête-crête (cycle retour). Le résultat exploité est le facteur de perte tan(δ). Pour le cycle retour, on indique la valeur maximale de tan(δ) observée, noté tan(δ)max. Cette valeur est représentative de l'hystérèse du matériau et dans le cas présent de la résistance au roulement : plus la valeur de tan(δ)max est faible, plus la résistance au roulement est basse.

### 3) Propriétés après cuisson : la perméabilité

Les valeurs de perméabilité sont mesurées en utilisant un « testeur » de perméabilité MOCON OXTRAN 2/60 à 40°C. Des échantillons cuits sous forme de disques d'une épaisseur déterminée (approximativement 0,8 à 1 mm) sont montés sur l'appareil et rendus étanches avec de la graisse à vide. L'une des faces du disque est maintenue sous 10 psi d'azote alors que l'autre face est maintenue sous 10 psi d'oxygène. On contrôle l'augmentation de la concentration en oxygène en utilisant un détecteur à oxygène « Coulox » sur la face maintenue sous azote. On note la concentration en oxygène sur la face maintenue sous azote permettant d'atteindre une valeur constante, utilisée pour déterminer la perméabilité à l'oxygène.

Une valeur arbitraire de 100 est donnée pour la perméabilité à l'oxygène du témoin, un résultat inférieur à 100 indiquant une diminution de la perméabilité à l'oxygène donc une meilleure imperméabilité.

### 4) Tests sur pneumatiques

### 4.1) Résistance au roulement

La résistance au roulement est mesurée sur un volant, selon la méthode ISO 7-67 (1992). Dans le tableau III, la résistance au roulement indiquée correspond à la différence entre la résistance au roulement du pneumatique de référence et la résistance au roulement du pneumatique selon l'invention.

### 4.2) Endurance

L'endurance en roulage de très longue durée (40 000 km) sous conditions très sévères a été testée, sur machine de roulage automatique, selon différents cycles prédéterminés de pression, de charge et de vitesse ; après quoi on observe l'état général de chaque pneumatique.

### 4.3) Perte de pression

Des tests de mesure ont été conduits pour évaluer la perte de pression de pneumatiques après 4 semaines à 20°C.

Des bandages pneumatiques conformes à l'invention, du type pour véhicule tourisme (dimension 205/55 R16), ont été fabriqués, leur paroi interne étant recouverte par une couche étanche à l'air d'une épaisseur donnée constante (posée sur tambour de confection, avant fabrication du reste du pneumatique). Puis, les pneumatiques ont été vulcanisés. Ces bandages pneumatiques conformes à l'invention ont été comparés à des bandages pneumatiques témoins (marque MICHELIN Energy^{™} Saver) comportant une couche étanche à l'air conventionnelle, de même épaisseur, à base de caoutchouc butyl. L'étanchéité des deux types de bandages a été mesurée par la mesure de la perte de pression à 20°C après 4 semaines. Les résultats présentés ci-dessous sont présentés en base 100 : une valeur arbitraire de 100 est donnée pour la performance en étanchéité du témoin, un résultat supérieur à 100 indiquant une meilleure performance en étanchéité donc une diminution de la perte de pression après 4 semaines.

### II Préparation et tests des compositions de caoutchouc

On procède pour les essais qui suivent de la manière suivante : on introduit dans un mélangeur interne (taux de remplissage final : environ 70 % en volume), dont la température initiale de cuve est d'environ 60°C, successivement le ou les caoutchoucs butyles, le ou les élastomères s'ils sont présents, les charges et l'agent plastifiant s'il est présent dans la composition de caoutchouc, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 140°C.

On récupère le mélange ainsi obtenu, on le refroidit puis on incorpore du soufre, un accélérateur type sulfénamide et les autres éléments du système de vulcanisation sur un mélangeur (homo-finisseur) à 30°C, en mélangeant le tout (phase productive) pendant un temps approprié (par exemple entre 5 et 12 min).

Les compositions ainsi obtenues sont ensuite calandrées soit sous forme de plaques (épaisseur de 2 à 3 mm) ou feuilles fines de caoutchouc pour la mesure de leurs propriétés physiques ou mécaniques, soit extrudées sous la forme de gommes intérieures de pneumatique.

### Exemple 1 : composition de caoutchouc comprenant une charge inerte et une huile plastifiante

Le tableau I suivant rassemble les ingrédients et les teneurs (exprimées en pce) d'une composition comparative (T1) et de trois compositions utilisables selon l'invention (C1 à C3).

**Tableau I**

| | **T1** | **C1** | **C2** | **C3** |
|---|---|---|---|---|
| **Caoutchouc butyle⁽¹⁾** | 90 | 90 | 90 | 90 |
| **Polyisoprène synthétique⁽²⁾** | 10 | 10 | 10 | 10 |
| **Noir de carbone⁽³⁾** | 50 | 25 | 25 | 5 |
| **Graphite naturel** | - | - | 15 | - |
| **Craie naturelle** | 20 | 20 | 20 | 40 |
| **Agent plastifiant⁽⁴⁾** | 3 | 3 | 3 | 3 |
| **Soufre** | 1,5 | 1,5 | 1,5 | 1,5 |
| **MBTS(⁵)** | 1,2 | 1,2 | 1,2 | 1,2 |
| **ZnO** | 1,5 | 1,5 | 1,5 | 1,5 |
| **Acide stéarique** | 1,5 | 1,5 | 1,5 | 1,5 |

| | | | | |
|---|---|---|---|---|
| (1) Polyisobutylène bromé commercialisé par la société EXXON CHEMICAL Co. (2) Polyisoprène synthétique à 97 % de structure cis-1,4 vendu par la société Nizhnekamsk sous la référence IR6596 (3) N772 (4) Huile TDAE (5) Disulfure de 2-mercaptobenzothiazyle | | | | |

La composition T1 est une composition témoin, conventionnelle utilisée dans les gommes intérieures de pneumatiques, qui comporte 50 pce de noir de carbone et 20 pce de craie.

La composition C1 est conforme à l'invention, et comporte 25 pce de noir de carbone et 20 pce de craie.

La composition C2 est conforme à l'invention, et comporte 25 pce de noir de carbone, 20 pce de craie et 15 pce de graphite.

La composition C3 est conforme à l'invention, et comporte 5 pce de noir de carbone et 40 pce de craie.

Les propriétés des compositions T1 et C1 à C3 après cuisson ont été résumées dans le tableau II ci-dessous.

**Tableau II**

| | **T1** | **C1** | **C2** | **C3** |
|---|---|---|---|---|
| **Contrainte à la rupture (en Mpa)** | 9,3 | 11,5 | 8,1 | 7,3 |
| **Allongement à la rupture (en %)** | 630 | 835 | 735 | 875 |
| **Tan(δ)max (à 23°C)** | 0,37 | 0,34 | 0,34 | 0,33 |
| **Perméabilité à l'oxygène** | 100 | 101 | 75 | 100 |

Après cuisson, on constate que les propriétés d'allongement et de contrainte à la rupture des compositions C1 à C3 conformes à l'invention sont globalement équivalentes à celles de la composition témoin T1.

De plus, les compositions C1 à C3 conformes à l'invention présentent une hystérèse plus faible que la composition témoin T1 (tan(δ)max).

Enfin, les compositions C1 et C3 conformes à l'invention présentent une perméabilité à l'oxygène équivalente à celle de la composition témoin T1. On constate même que la composition C2 conforme à l'invention présente une plus faible perméabilité (et donc une meilleure imperméabilité) à l'oxygène que celle de la composition témoin T1.

### Exemple 2 : composition de caoutchouc comprenant une charge inerte et une résine plastifiante

Le tableau III suivant rassemble les ingrédients et les teneurs (exprimées en pce) d'une composition T2 et d'une composition C4.

**Tableau III**

| | **T2** | **C4** |
|---|---|---|
| **Caoutchouc butyle⁽¹⁾** | 100 | 100 |
| **Noir de carbone⁽²⁾** | 50 | 25 |
| **Graphite naturel** | 10 | 10 |
| **Agent plastifiant⁽³⁾** | 8 | 8 |
| **Soufre** | 1,5 | 1,5 |
| **MBTS⁽⁴⁾** | 1,2 | 1,2 |
| **ZnO** | 1,5 | 1,5 |
| **Acide stéarique** | 1,5 | 1,5 |

| | | |
|---|---|---|
| (1) Polyisobutylène bromé commercialisé par la société EXXON CHEMICAL Co. (2) N772 (3) Résine plastifiante : résine coupe C5/coupe C9 commercialisée par la société Cray Valley sous la dénomination « Résine THER 8644 » (Tg= 44°C) (4) Disulfure de 2-mercaptobenzothiazyle | | |

La composition T2 est une composition conventionnelle utilisée dans les gommes intérieures de pneumatiques, qui comporte 50 pce de noir de carbone, 10 pce de graphite et 8 pce de résine plastifiante.

La composition C4 comporte 25 pce de noir de carbone, 10 pce de graphite et 8 pce de résine plastifiante.

Les propriétés des compositions T2 et C4 après cuisson ont été résumées dans le tableau IV ci-dessous.

**Tableau IV**

| | **T2** | **C4** |
|---|---|---|
| **Contrainte à la rupture (en Mpa)** | 9,4 | 9,2 |
| **Allongement à la rupture (en %)** | 725 | 840 |
| **Tan(δ)max (à 23°C)** | 0,51 | 0,49 |
| **Perméabilité à l'oxygène** | 100 | 100 |

Après cuisson, on constate que les propriétés d'allongement et de contrainte à la rupture de la composition C4 sont globalement équivalentes à celles de la composition T2.

De plus, la composition C4 présente une hystérèse plus faible que la composition T2 (tan(δ)max).

Enfin, la composition C4 présente une perméabilité à l'oxygène équivalente à celle de la composition T2.

### Exemple 3 : composition de caoutchouc ne comprenant ni charge inerte, ni plastifiant

Le tableau V suivant rassemble les ingrédients et les teneurs (exprimées en pce) d'une composition T3 et d'une composition C5.

**Tableau V**

| | **T3** | **C5** |
|---|---|---|
| **Caoutchouc butyle⁽¹⁾** | 100 | 100 |
| **Noir de carbone⁽²⁾** | 50 | 25 |
| **Graphite naturel** | 10 | 10 |
| **Soufre** | 1,5 | 1,5 |
| **MBTS⁽³⁾** | 1,2 | 1,2 |
| **ZnO** | 1,5 | 1,5 |
| **Acide stéarique** | 1,5 | 1,5 |

| | | |
|---|---|---|
| (1) Polyisobutylène bromé commercialisé par la société EXXON CHEMICAL Co. (2) N772 (3) Disulfure de 2-mercaptobenzothiazyle | | |

La composition T3 est une composition conventionnelle utilisée dans les gommes intérieures de pneumatiques, qui comporte 50 pce de noir de carbone et 10 pce de graphite.

La composition C5 comporte 25 pce de noir de carbone et 10 pce de graphite.

Les propriétés des compositions T3 et C5 après cuisson ont été résumées dans le tableau VI ci-dessous.

**Tableau VI**

| | **T3** | **C5** |
|---|---|---|
| **Contrainte à la rupture (en Mpa)** | 9,3 | 9,5 |
| **Allongement à la rupture (en %)** | 635 | 780 |
| **Tan(δ)max (à 23°C)** | 0,40 | 0,37 |
| **Perméabilité à l'oxygène** | 100 | 101 |

Après cuisson, on constate que les propriétés d'allongement et de contrainte à la rupture de la composition C5 sont globalement équivalentes à celles de la composition T3.

De plus, la composition C5 présente une hystérèse plus faible que la composition T3 (tan(δ)max).

Enfin, la composition C5 présente une perméabilité à l'oxygène équivalente à celle de la composition T3.

### III Tests de roulage des pneumatiques

Le tableau VII suivant rassemble les ingrédients et les teneurs (exprimées en pce) d'une composition comparative (T4). Le rappel des ingrédients et des teneurs de la composition C2 utilisable selon l'invention est donné à titre indicatif.

**Tableau VII**

| | **T4** | **C2** |
|---|---|---|
| **Caoutchouc butyle⁽¹⁾** | 90 | 90 |
| **Polyisoprène synthétique⁽²⁾** | 10 | 10 |
| **Noir de carbone⁽³⁾** | 50 | 25 |
| **Graphite naturel** | 15 | 15 |
| **Craie naturelle** | 20 | 20 |
| **Huile plastifiante⁽⁴⁾** | 3 | 3 |
| **Résine plastifiante⁽⁵⁾** | 8 | - |
| **Soufre** | 1,5 | 1,5 |
| **MBTS⁽⁶⁾** | 1,2 | 1,2 |
| **ZnO** | 1,5 | 1,5 |
| **Acide stéarique** | 1,5 | 1,5 |

| | | |
|---|---|---|
| (1) Polyisobutylène bromé commercialisé par la société EXXON CHEMICAL Co. (2) Polyisoprène synthétique à 97 % de structure cis-1,4 vendu par la société Nizhnekamsk sous la référence IR6596 (3) N772 (4) Huile TDAE (5) Résine plastifiante : Résine plastifiante : résine coupe C5/coupe C9 commercialisée par la société Cray Valley sous la dénomination « Résine THER 8644 » (Tg= 44°C) (6) Disulfure de 2-mercaptobenzothiazyle | | |

Les compositions T4 et C2 précédentes ont été testées comme gomme intérieure de pneumatiques tourisme à carcasse radiale, de dimension 205/55 R16 (indice de vitesse H). Elles ont été préparées comme détaillé précédemment et calandrées sous forme de gommes intérieures de pneumatique à une épaisseur de 0,7 mm.

Les tests de résistance au roulement, d'endurance et de perte de pression sont reportés dans le tableau VIII.

**Tableau VIII**

| | **T4** | **C2** |
|---|---|---|
| **Résistance au roulement** | - | gain de 0,12 kg/T |
| **Endurance 40000 km** | ok | ok |
| **Perte de pression** | 100 | 100 |

Ces résultats montrent que pour une étanchéité identique, le pneumatique ayant en tant que gomme intérieure la composition C2 conforme à l'invention présente une résistance au roulement améliorée par rapport au pneumatique correspondant à la composition témoin T4.

Le test d'endurance à 40 000 km pour les deux pneumatiques se révèle positifs, c'est-à-dire que les deux pneumatiques sont capables de parcourir 40 000 km sans présenter de détériorations notables.

On notera que cette validation des critères d'endurance est d'autant plus remarquable pour le pneumatique comportant une gomme intérieure de composition C2 conforme à l'invention, pour lequel la composition correspondante contient plus de deux fois moins de noir de carbone que la composition témoin T4.

Enfin, on constate que la perte de pression du pneumatique formé à partir de la gomme intérieure C2 est équivalente à la perte de pression du pneumatique formé à partir de la gomme intérieure T4.

## Revendications

1. Gomme intérieure pour pneumatique ayant une composition de caoutchouc comprenant :
- une matrice élastomérique comprenant au moins 50 pce d'un ou plusieurs caoutchoucs butyles,
- de 5 à 30 pce de noir de carbone,
- de 0 à moins de 10 pce d'un agent plastifiant,
- au moins 5 pce d'une ou plusieurs charges additionnelles choisies parmi les charges renforçantes autres que du noir de carbone, le graphite et les charges inertes, lesdites charges inertes étant choisies parmi la craie, l'argile, la bentonite, le talc, le kaolin, des microbilles de verre, des paillettes de verre et un mélange de ces composés,
la teneur totale en charges renforçantes et en graphite dans la composition de caoutchouc variant de 5 à 50 pce,
la teneur de la ou des charges inertes dans la composition de caoutchouc varie de 1 à 60 pce.

2. Gomme intérieure selon la revendication 1, **caractérisée en ce que** le ou les caoutchoucs butyles sont choisis parmi les caoutchoucs isobutylène, les copolymères d'isobutylène et d'isoprène, les caoutchoucs bromobutyles et les caoutchoucs chlorobutyles.

3. Gomme intérieure selon la revendication 1 ou 2, **caractérisée en ce que** la teneur en caoutchoucs butyles de la composition varie de 70 à 100 pce, de préférence de 90 à 100 pce.

4. Gomme intérieure selon l'une quelconque des revendications précédentes, **caractérisée en ce que** la matrice élastomérique comprend un coupage de plusieurs caoutchoucs butyles.

5. Gomme intérieure selon l'une quelconque des revendications 1 à 3, **caractérisée en ce que** la matrice élastomérique consiste en un ou plusieurs caoutchoucs butyles.

6. Gomme intérieure selon l'une quelconque des revendications précédentes, **caractérisée en ce que** la teneur en noir de carbone dans la composition de caoutchouc varie de 15 à 30 pce, de préférence varie de 20 à 30 pce.

7. Gomme intérieure selon l'une quelconque des revendications précédentes, **caractérisée en ce que** la teneur de graphite dans la composition de caoutchouc varie de 0 à moins de 35 pce, de préférence de 1 à moins de 35 pce, et encore plus préférentiellement de 1 à 20 pce.

8. Gomme intérieure selon l'une quelconque des revendications précédentes, **caractérisée en ce que** le graphite se présente sous forme lamellaire.

9. Gomme intérieure selon l'une quelconque des revendications précédentes, **caractérisée en ce que** la teneur de la ou des charges inertes dans la composition de caoutchouc varie de 1 à 45 pce.

10. Gomme intérieure selon l'une quelconque des revendications 1 à 5 et 7 à 9, **caractérisée en ce que** la teneur en noir de carbone dans la composition de caoutchouc varie de 5 à 15 pce.

11. Gomme intérieure selon l'une quelconque des revendications précédentes, **caractérisée en ce que** la charge inerte est de la craie.

12. Gomme intérieure selon l'une quelconque des revendications précédentes, **caractérisée en ce que** la teneur en agent plastifiant dans la composition de caoutchouc est inférieure ou égale à 6 pce.

13. Pneumatique comportant une gomme intérieure telle que définie dans l'une quelconque des revendications précédentes.

## Patentansprüche

1. Innengummi für einen Reifen mit einer Kautschukzusammensetzung, umfassend:
- eine Elastomermatrix, die mindestens 50 phe eines oder mehrerer Butylkautschuke umfasst,
- 5 bis 30 phe Ruß,
- 0 bis weniger als 10 phe eines Weichmachers,
- mindestens 5 phe eines oder mehrerer zusätzlicher Füllstoffe, die aus den verstärkenden Füllstoffen außer Ruß, Graphit und den inerten Füllstoffen ausgewählt sind, wobei die inerten Füllstoffen aus Kreide, Ton, Bentonit, Talkum, Kaolin, Glasmikrokugeln, Glasflocken und einer Mischung dieser Verbindungen ausgewählt sind,
wobei der Gesamtgehalt an verstärkenden Füllstoffen und an Graphit in der Kautschukzusammensetzung von 5 bis 50 phe variiert,
wobei der Gehalt des oder der inerten Füllstoffe in der Kautschukzusammensetzung von 1 bis 60 phe variiert.

2. Innengummi nach Anspruch 1, **dadurch gekennzeichnet, dass** der oder die Butylkautschuke aus den Isobutylenkautschuken, den Isobutylen-Isopren-Copolymeren, den Brombutylkautschuken und den Chlorbutylkautschuken ausgewählt sind.

3. Innengummi nach Anspruch 1 oder 2, **dadurch gekennzeichnet, dass** der Gehalt an Butylkautschuken der Zusammensetzung von 70 bis 100 phe, bevorzugt von 90 bis 100 phe, variiert.

4. Innengummi nach einem der vorhergehenden Ansprüche, **dadurch gekennzeichnet, dass** die Elastomermatrix einen Verschnitt von mehreren Butylkautschuken umfasst.

5. Innengummi nach einem der Ansprüche 1 bis 3, **dadurch gekennzeichnet, dass** die Elastomermatrix aus einem oder mehreren Butylkautschuken besteht.

6. Innengummi nach einem der vorhergehenden Ansprüche, **dadurch gekennzeichnet, dass** der Rußgehalt in der Kautschukzusammensetzung von 15 bis 30 phe, bevorzugt von 20 bis 30 phe, variiert.

7. Innengummi nach einem der vorhergehenden Ansprüche, **dadurch gekennzeichnet, dass** der Graphitgehalt in der Kautschukzusammensetzung von 0 bis weniger als 35 phe, bevorzugt von 1 bis weniger als 35 phe und noch stärker bevorzugt von 1 bis 20 phe variiert.

8. Innengummi nach einem der vorhergehenden Ansprüche, **dadurch gekennzeichnet, dass** der Graphit in Lamellenform vorliegt.

9. Innengummi nach einem der vorhergehenden Ansprüche, **dadurch gekennzeichnet, dass** der Gehalt des oder der inerten Füllstoffe in der Kautschukzusammensetzung von 1 bis 45 phe variiert.

10. Innengummi nach einem der Ansprüche 1 bis 5 und 7 bis 9, **dadurch gekennzeichnet, dass** der Rußgehalt in der Kautschukzusammensetzung von 5 bis 15 phe variiert.

11. Innengummi nach einem der vorhergehenden Ansprüche, **dadurch gekennzeichnet, dass** der inerte Füllstoff Kreide ist.

12. Innengummi nach einem der vorhergehenden Ansprüche, **dadurch gekennzeichnet, dass** der Weichmachergehalt in der Kautschukzusammensetzung 6 phe oder weniger beträgt.

13. Reifen mit einem Innengummi wie in einem der vorhergehenden Ansprüche definiert.

## Claims

1. Inner liner for tyre having a rubber composition comprising:
- an elastomeric matrix comprising at least 50 phr of one or more butyl rubbers,
- from 5 to 30 phr of carbon black,
- from 0 to less than 10 phr of a plasticizing agent,
- at least 5 phr of one or more additional fillers selected from reinforcing fillers other than carbon black, graphite-and inert fillers, said inert fillers is (are) selected from chalk, clay, bentonite, talc, kaolin, glass microbeads, glass flakes, and a mixture of these compounds, the total content of reinforcing fillers and of graphite in the rubber composition varying from 5 to 50 phr, the content of the inert filler(s) in the rubber composition varies from 1 to 60 phr.

2. Inner liner according to Claim 1, in which the butyl rubber(s) is (are) selected from isobutylene rubbers, isobutylene/isoprene copolymers, bromobutyl rubbers and chlorobutyl rubbers.

3. Inner liner according to Claim 1 or 2, in which the content of butyl rubbers of the composition varies from 70 to 100 phr, preferably from 90 to 100 phr.

4. Inner liner according to any one of the preceding claims, in which the elastomeric matrix comprises a blend of several butyl rubbers.

5. Inner liner according to any one of Claims 1 to 3, in which the elastomeric matrix consists of one or more butyl rubbers.

6. Inner liner according to any one of the preceding claims, in which the content of carbon black in the rubber composition varies from 15 to 30 phr, and preferably varies from 20 to 30 phr.

7. Inner liner according to any one of the preceding claims, in which the content of graphite in the rubber composition varies from 0 to less than 35 phr, preferably from 1 to less than 35 phr, and even more preferentially from 1 to 20 phr.

8. Inner liner according to any one of the preceding claims, in which the graphite is in lamellar form.

9. Inner liner according to any one of the preceding claims, in which the content of the inert filler(s) in the rubber composition varies from 1 to 45 phr.

10. Inner liner according to any one of Claim 1 to 5 and 7 to 9, in which the content of carbon black in the rubber composition varies from 5 to 15 phr.

11. Inner liner according to any one of the preceding claims, in which the inert filler is chalk.

12. Inner liner according to any one of the preceding claims, in which the content of plasticizing agent in the rubber composition is less than or equal to 6 phr.

13. Tyre comprising an inner liner as defined in any one of the preceding claims.
